# FASCICULE DE BREVET EUROPEEN

(11) **EP 2 986 871 B1**
(45) Date de publication et mention de la délivrance du brevet: **15.11.2017**
(21) Numéro de dépôt: 14715367.0
(22) Date de dépôt: 13.03.2014
(51) Int. Cl.: F16H 61/04

(54) **PROCEDE DE CONTROLE DU CRABOTAGE D'UNE BOITE DE VITESSES**
VERFAHREN ZUR STEUERUNG DER KLAUENKUPPLUNG EINES GETRIEBES
METHOD FOR CONTROLLING THE CLAW COUPLING OF A GEARBOX

(30) Priorité: 17.04.2013 FR 1353479
(43) Date de publication de la demande: 24.02.2016
(73) Titulaire: Renault S.A.S., 92100 Boulogne-Billancourt (FR)
(72) Inventeur: VESPASIEN, Jean-Marie, F-94600 Choisy-le-Roi (FR)
(86) Numéro de dépôt international: PCT/FR2014/050574
(87) Numéro de publication internationale: WO 2014/170565

(56) Documents cités:
- EP-A2- 0 928 715
- WO-A1-2012/131259
- DE-A1- 19 530 233
- DE-A1-102006 003 715
- FR-A1- 2 933 247
- US-A1- 2008 314 176

## Description

La présente invention se rapporte au domaine des transmissions de véhicule automobile.

Elle se rapporte au contrôle du crabotage d'une boîte de vitesse lors de passages de vitesses nécessitant la maîtrise du différentiel de vitesse entre les éléments de boîte à craboter, en l'absence de système de synchronisation mécanique par frottement.

Cette invention a pour objet un procédé de contrôle du crabotage d'une boîte de vitesses de véhicule. DE19530233 divulgue un procédé de contrôle du crabotage de deux éléments de boîte de vitesses tournant initialement à des vitesses différentes lors d'une demande de crabotage par le conducteur ou par le calculateur de la boîte. Elle trouve une application privilégiée, mais non limitative, sur une transmission hybride pour véhicule automobile muni d'un moteur thermique et d'une machine électrique d'entraînement comportant deux arbres primaires concentriques portant chacun au moins un pignon de descente sur un arbre secondaire relié aux roues du véhicule, telle que décrite dans la publication WO2012/131259.

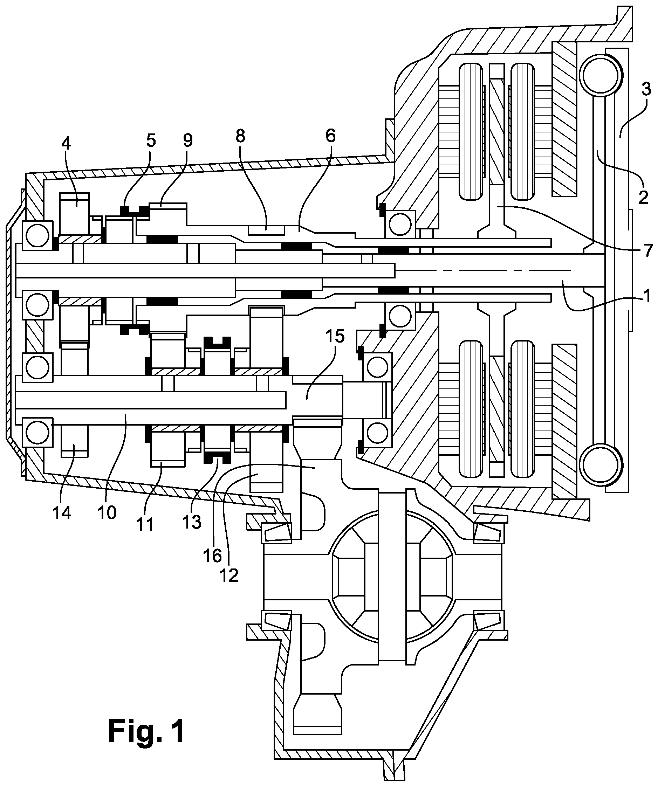

Cette transmission, illustrée par la figure 1, comporte un arbre primaire plein 1 connecté directement par l'intermédiaire d'un système de filtration (moyeu amortisseur, « damper », double volant ou autre) 2, au volant d'inertie 3 d'un moteur thermique (non représenté). L'arbre plein 1 porte un pignon fou 4 pouvant être connecté avec celui-ci par un premier système de couplage 5 (crabot, synchroniseur, ou autre type de coupleur progressif ou non). Un arbre primaire creux 6 est relié au rotor d'une machine électrique 7.

L'arbre creux 6 porte deux pignons fixes 8, 9. Il peut être relié à l'arbre primaire plein 1 par intermédiaire du système de couplage 5, avec ou sans synchroniseur mécanique. Un arbre secondaire 10 porte deux pignons fous 11 et 12. On peut relier les pignons fous 11, 12 à l'arbre primaire par l'intermédiaire d'un deuxième système de couplage 13, avec ou sans synchroniseur mécanique. L'arbre secondaire 10 porte également un pignon fixe 14 et un pignon de descente 15 vers un différentiel 16 relié aux roues (non représentées) du véhicule.

Le premier moyen de couplage 5 peut occuper au moins trois positions, dans lesquelles :
- le moteur thermique est découplé de la chaîne cinématique reliant la machine électrique 7 aux roues,
- le moteur thermique entraîne les roues avec ou sans l'appoint de la machine électrique, et
- le moteur thermique et la machine électrique 7 sont couplés de manière à additionner en direction des roues, leurs couples respectifs.

Le deuxième moyen de couplage 13 dispose également de trois positions, dans lesquelles, il est en position neutre, ou l'un ou l'autre des deux pignons fous 11, 12, sont crabotés sur l'arbre secondaire 10.

Lorsqu'aucun moyen de synchronisation mécanique n'est prévu sur les systèmes de couplage 5 et 13, le passage d'un mode cinématique à l'autre, requiert le pilotage électronique de la synchronisation des éléments à craboter. Le dessin des dents situées sur les systèmes de couplage 5 et 13 peut exiger de maîtriser un certain différentiel de vitesse entre les éléments à craboter, pour assurer le couplage. Un calculateur est alors chargé de contrôler ce différentiel de vitesse.

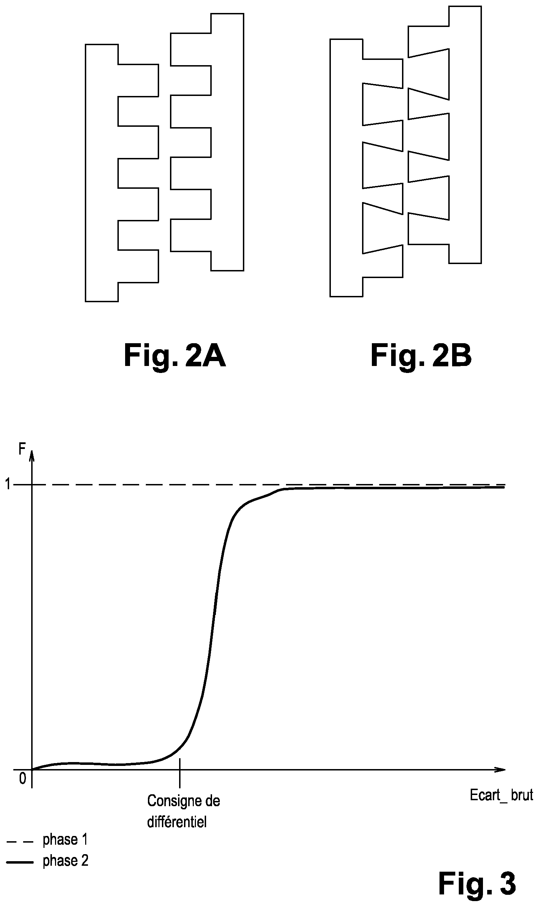

Les dents des éléments à craboter peuvent avoir différentes formes. Lorsqu'elles sont droites (rectangulaires) comme sur la figure 2A, ou avec des « anti-lâchers », comme sur la figure 2B, la surface de contact dent contre dent n'est pas négligeable. Si les deux pièces sont exactement à la même vitesse, il y a un risque de buter dent contre dent, et donc de ne pas réussir à craboter. Il est alors nécessaire de conserver un certain écart de vitesse entre les éléments à craboter, pour qu'ils trouvent des positions relatives permettant le crabotage.

Une fois ce différentiel de vitesse établi, l'ordre de crabotage (ou de couplage) peut être donné, pour entraîner le déplacement en translation du système de couplage.

Le problème technique à résoudre pour parfaire l'opération de couplage est alors le suivant : maintenir le différentiel de vitesse jusqu'au moment du crabotage, sous peine d'un échec, alors qu'à l'instant même du crabotage, la mécanique impose le synchronisme des pièces couplées (c'est à dire un différentiel de vitesse nul).

La présente invention vise à résoudre la contradiction existant au moment du crabotage, entre la nécessité de maintenir un différentiel de vitesse, et l'exigence mécanique d'annuler ce même différentiel.

Dans ce but, elle propose une opération en deux phases. Dans une première phase, l'écart de régime des éléments tournants est porté par un régulateur à une valeur de consigne non nulle sans déplacer en translation les éléments tournants l'un vers l'autre. Dans une deuxième phase, commençant lorsque l'écart de régime atteint sa valeur souhaitée, l'écart vu par le régulateur est modulé par un facteur (F), qui est fonction de l'écart brut entre la valeur mesurée et la valeur de consigne. Les éléments tournants sont déplacés en translation l'un vers l'autre. Ce déplacement se poursuit jusqu'à la fin du crabotage.

De préférence, le facteur (F) est imposé à la valeur 1 pendant la première phase, puis défini par une table de valeurs fonction de l'écart brut entre la valeur mesurée et une valeur de consigne pendant la deuxième phase.

L'invention sera mieux comprise à la lecture de la description suivante d'un mode de réalisation non limitatif de celle-ci, en se reportant aux dessins annexés, sur lesquels :
- la figure 1 est un schéma d'architecture de boîte de vitesses,
- les figures 2A et 2B illustrent deux types de crabots,
- la figure 3 illustre le calcul du facteur de modulation de l'écart brut selon les phases de l'opération,
- la figure 4 résume la stratégie de l'invention, et
- la figure 5 montre la boucle de régulation associée.

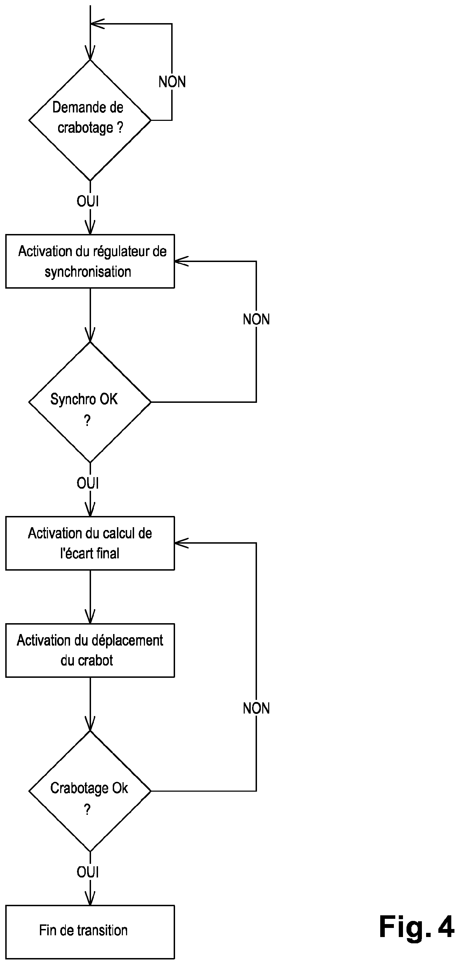

La stratégie illustrée par la figure 4 est la suivante. Suite à une demande de crabotage par le conducteur, ou par le calculateur de la transmission, un régulateur de synchronisation est activé. Ce régulateur est implanté dans le calculateur de la transmission ou du groupe motopropulseur. Il pilote les sources d'énergie motrice du véhicule, machine électrique et/ou moteur thermique, pour établir un écart de régime entre les deux éléments tournants. Cet écart, ou différentiel de consigne, entre une valeur de régime mesurée sur un des éléments tournants et un régime de consigne, a une valeur non nulle. Comme indiqué plus haut, ce différentiel est déterminé pour faciliter le crabotage en l'absence d'organe de synchronisation mécanique.

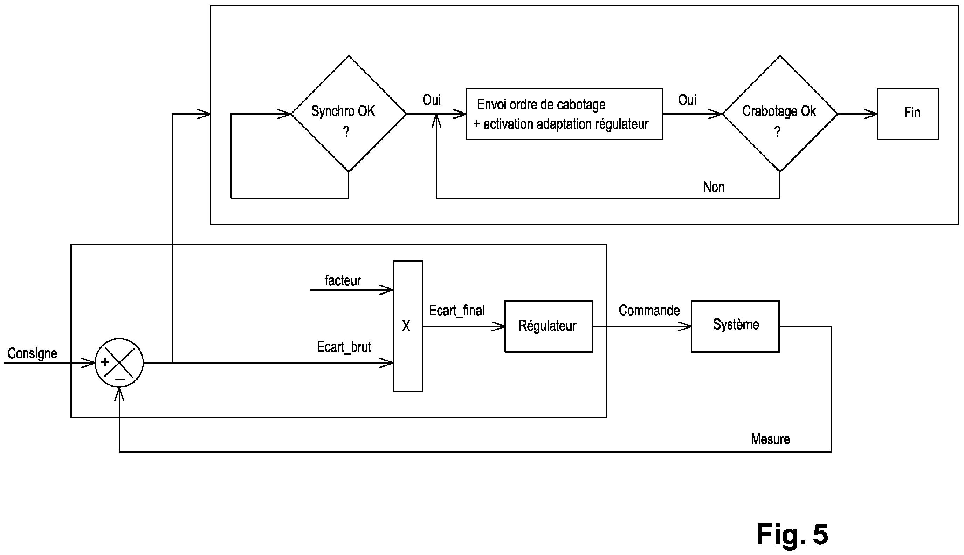

A partir de la demande de crabotage, impliquant l'activation du régulateur de la figure 5, celui-ci impose au « système » (actionneurs des sources d'énergie) une « commande », propre à établir l'« écart final » de régimes mentionné sur les figures 4 et 5. Pendant une première phase de l'opération, dite phase de synchronisation initiale, l' « écart final » est maintenu sur sa valeur brute. Cette phase permet d'établir le différentiel de vitesse souhaité entre les deux éléments à craboter. A la fin de cette première phase, c'est-à-dire à l'étape intitulée « synchro OK » sur la figure 5, on entre dans la seconde phase de l'opération, ou phase de crabotage. Le calcul de l'écart final est alors adapté au sein du régulateur, de manière à maintenir le différentiel de régime souhaité jusqu'au crabotage, sans sur-réagir, c'est-à-dire sans provoquer de chocs. Cette adaptation est le résultat de l'introduction d'un facteur de modulation F dans la boucle de régulation. Avec elle, commence le déplacement d'un élément tournant, tel qu'un crabot à dents droites ou rectangulaires (figure 2A), ou avec un « anti-lâcher » (figure 2B).

La régulation en boucle fermée de la figure 5 est du type auto-adaptatif. Le procédé de contrôle repose sur une régulation en boucle fermée auto-adaptative de l'écart de régimes entre les éléments tournants, se décomposant en deux phases. Pendant la première phase, l'écart de régime des éléments tournants est porté par un régulateur à une valeur de consigne non nulle, sans déplacer en translation les éléments tournants l'un vers l'autre. Le déplacement des éléments tournants jusqu'au crabotage intervient dans la deuxième phase, qui commence lorsque l'écart de régime atteint sa valeur souhaitée. L'écart vu par le régulateur est alors modulé par un facteur (F), qui est fonction de l'écart brut entre la valeur mesurée et la valeur de consigne.

Pendant la phase de synchronisation, le régulateur reçoit en entrée l'« écart final », strictement égal à l' « écart brut » (différence entre la consigne et la mesure). Pendant la phase de crabotage, son calcul est adapté, en multipliant « l'écart brut » par le facteur F, dont la variation est illustrée par la figure 3 :
- ce facteur est imposé à la valeur 1, tant qu'on est dans une première phase, dite de synchronisation initiale,
- il est défini par une table de valeurs fonction de l'écart brut à partir d'une deuxième phase de crabotage.

La variation du facteur F est déclenchée dans le bloc « supervision » de la figure 5, à l'étape d' « activation de l'adaptation du régulateur » de la figure 4. Le différentiel de régime a alors atteint la valeur souhaitée pour déclencher le crabotage (« synchro OK »). On attaque alors la phase de crabotage pendant laquelle le facteur F module l'écart vu par le régulateur boucle fermée, tandis que le déplacement du crabot en translation est opéré. L'adaptation est poursuivie jusqu'au crabotage complet. A cet instant (« crabotage OK »), le changement de mode cinématique est terminé. Pendant la phase de crabotage, l'écart brut est donc multiplié par le facteur de modulation (F), et cette modulation se poursuit tant que le crabotage des éléments tournants n'est pas complètement réalisé.

Pendant la phase de crabotage, le coefficient permet à la fois :
- le maintien de la synchronisation régime jusqu'à l'instant du crabotage,
- de prévenir toute compensation exagérée de la brusque annulation du différentiel de vitesse provoquée par la mécanique, et
- de compenser efficacement toute éventuelle perturbation sur la synchronisation.

En résumé, le régulateur proposé permet :
- de garantir une synchronisation rapide et robuste de l'élément à craboter, en contrôlant le différentiel de vitesse requis pour le crabotage pendant la première phase de l'opération, puis
- de maintenir ce différentiel jusqu'au crabotage, sans sur-réagir, c'est-à-dire sans provoquer de chocs, pendant la deuxième phase de l'opération, c'est-à-dire au moment même du crabotage.

Comme indiqué plus haut, l'invention trouve une application privilégiée sur une transmission hybride pour véhicule automobile muni d'un moteur thermique et d'une machine électrique d'entraînement. Dans ce cas, le régulateur délivre un signal de commande aux actionneurs de l'une ou l'autre ou des deux sources de puissance introduite dans la boîte de vitesses, moteur thermique et machine électrique. Ainsi, le régulateur peut contrôler le régime d'une machine électrique d'entrée de puissance dans la transmission, et/ou celui d'un moteur thermique.

## Revendications

1. Procédé de contrôle du crabotage de deux éléments de boîte de vitesses tournant initialement à des vitesses différentes lors d'une demande de crabotage par le conducteur ou par le calculateur de la boîte, **caractérisé en ce que** dans une première phase l'écart de régime des éléments tournants est porté par un régulateur à une valeur de consigne non nulle sans déplacer en translation les éléments tournants l'un vers l'autre, et **en ce que** le déplacement des éléments tournants jusqu'au crabotage intervient dans une deuxième phase commençant lorsque l'écart de régime atteint sa valeur souhaitée, au cours de laquelle l'écart vu par le régulateur est modulé par un facteur (F), qui est fonction de l'écart brut entre la valeur mesurée et la valeur de consigne.

2. Procédé de contrôle selon la revendication 1, **caractérisé en ce que** le facteur (F) est imposé à la valeur 1 pendant la première phase, puis défini par une table de valeurs fonction de l'écart brut entre la valeur mesurée et une valeur de consigne pendant la deuxième phase.

3. Procédé de contrôle selon la revendication 1 ou 2, **caractérisé en ce qu'**il repose sur une régulation en boucle fermée auto-adaptative de l'écart de régimes entre les éléments tournants.

4. Procédé de contrôle selon la revendication 3, **caractérisé en ce que** pendant la première phase, le régulateur reçoit en entrée un signal d'écart de régimes brut, égal à la différence entre une valeur de consigne et une valeur de mesure.

5. Procédé de contrôle selon la revendication 4, **caractérisé en ce que** pendant la deuxième phase, l'écart brut est multiplié par le facteur de modulation (F).

6. Procédé de contrôle selon l'une des revendications précédentes, **caractérisé en ce que** la modulation de l'écart vu par le régulateur est poursuivie tant que le crabotage des éléments tournants n'est pas complètement réalisé.

7. Procédé de contrôle selon l'une des revendications précédentes, **caractérisé en ce que** le régulateur délivre un signal de commande aux actionneurs des sources de puissance introduite dans la boîte de vitesses.

8. Procédé de commande selon la revendication 7, **caractérisé en ce que** le régulateur contrôle le régime d'une machine électrique d'entrée de puissance dans la transmission.

9. Procédé de commande selon la revendication 7 ou 8, **caractérisé en ce que** le régulateur contrôle le régime d'un moteur thermique d'entrée de puissance dans la transmission.

## Patentansprüche

1. Verfahren zur Steuerung des Einrückens der Klauenkupplung von zwei anfänglich mit unterschiedlichen Geschwindigkeiten drehenden Getriebeelementen bei einer Anforderung des Einrückens der Klauenkupplung durch den Fahrer oder das Steuergerät des Getriebes, **dadurch gekennzeichnet, dass** in einer ersten Phase die Drehzahldifferenz der drehenden Elemente von einem Regler auf einen Sollwert ungleich Null gebracht wird, ohne die drehenden Elemente translatorisch zueinander zu bewegen, und dass das Bewegen der drehenden Elemente bis zum Einrücken der Klauenkupplung in einer zweiten Phase erfolgt, die beginnt, wenn die Drehzahldifferenz ihren gewünschten Wert erreicht, während der die vom Regler erfasste Differenz um einen Faktor (F) angepasst wird, der von der Bruttodifferenz zwischen dem Messwert und dem Sollwert abhängig ist.

2. Steuerungsverfahren nach Anspruch 1, **dadurch gekennzeichnet, dass** der Faktor (F) während der ersten Phase als Wert 1 vorgegeben wird und dann während der zweiten Phase durch eine Wertetabelle in Abhängigkeit von der Bruttodifferenz zwischen dem Messwert und einem Sollwert festgelegt wird.

3. Steuerungsverfahren nach Anspruch 1 oder 2, **dadurch gekennzeichnet, dass** es auf einem autoadaptiven Regelkreis zur Regelung der Drehzahldifferenz zwischen den drehenden Elementen beruht.

4. Steuerungsverfahren nach Anspruch 3, **dadurch gekennzeichnet, dass** der Regler während der ersten Phase im Eingang ein Bruttodrehzahldifferenzsignal empfängt, das gleich dem Unterschied zwischen einem Sollwert und einem Messwert ist.

5. Steuerungsverfahren nach Anspruch 4, **dadurch gekennzeichnet, dass** die Bruttodifferenz während der zweiten Phase mit dem Anpassungsfaktor (F) multipliziert wird.

6. Steuerungsverfahren nach einem der vorhergehenden Ansprüche, **dadurch gekennzeichnet, dass** die Anpassung der vom Regler erfassten Differenz fortgesetzt wird, solange das Einrücken der Klauenkupplung der drehenden Elemente nicht vollständig ausgeführt ist.

7. Steuerungsverfahren nach einem der vorhergehenden Ansprüche, **dadurch gekennzeichnet, dass** der Regler ein Steuerungssignal an die Stellglieder der Quellen der in das Getriebe eingeführten Leistung abgibt.

8. Befehlsverfahren nach Anspruch 7, **dadurch gekennzeichnet, dass** der Regler die Drehzahl eines Elektromotors als Leistungseingang im Antrieb steuert.

9. Befehlsverfahren nach Anspruch 7 oder 8, **dadurch gekennzeichnet, dass** der Regler die Drehzahl eines Verbrennungsmotors als Leistungseingang im Antrieb steuert.

## Claims

1. Method for controlling the claw coupling of two gearbox elements initially rotating at different speeds when the driver or the gearbox computer requests claw coupling, **characterized in that**, in a first stage, the difference in speed of the rotary elements is brought by a regulator to a non-zero set point value without translating the rotary elements toward one another, and **in that** the movement of the rotary elements up to the claw coupling occurs in a second stage that begins when the difference in speed reaches the desired value thereof, during which the difference seen by the regulator is modulated by a factor (F), which is a function of the gross difference between the measured value and the set point value.

2. Control method according to Claim 1, **characterized in that** the factor (F) is set at the value 1 during the first stage, then defined by a table of values which is a function of the gross difference between the measured value and a set point value during the second stage.

3. Control method according to Claim 1 or 2, **characterized in that** it is based on a self-adjusting closed loop regulation of the difference in speeds between the rotary elements.

4. Control method according to Claim 3, **characterized in that**, during the first stage, the regulator receives, as input, a signal for speed gross difference, equal to the gap between a set point value and a measurement value.

5. Control method according to Claim 4, **characterized in that** during the second stage, the gross difference is multiplied by the modulating factor (F).

6. Control method according to one of the preceding claims, **characterized in that** the modulation of the difference seen by the regulator continues while the claw coupling of the rotary elements is not completed.

7. Control method according to one of the preceding claims, **characterized in that** the regulator delivers a command signal to the actuators of the sources of power introduced into the gearbox.

8. Command method according to Claim 7, **characterized in that** the regulator controls the speed of an electric machine for input of power into the transmission.

9. Command method according to Claim 7 or 8, **characterized in that** the regulator controls the speed of a heat engine for input of power into the transmission.
